# FASCICULE DE BREVET EUROPEEN

(11) **EP 2 502 828 B1**
(45) Date de publication et mention de la délivrance du brevet: **20.01.2016**
(21) Numéro de dépôt: 12000637.4
(22) Date de dépôt: 01.02.2012
(51) Int. Cl.: B64D 47/00

(54) **SURFACE AÉRODYNAMIQUE ET AÉRONEF**
AERODYNAMISCHE OBERFLÄCHE, UND LUFTFAHRZEUG
AERODYNAMIC SURFACE AND AIRCRAFT

(30) Priorité: 25.03.2011 FR 1100891
(43) Date de publication de la demande: 26.09.2012
(73) Titulaire: Airbus Helicopters, 13725 Marignane Cedex (FR)
(72) Inventeur: Lhermenault, Rodolphe, 13480 Cabries (FR); Isse, Frédéric, 13300 Salon de Provence (FR)
(74) Mandataire: Pouillot, Laurent Pierre Paul

(56) Documents cités:
- EP-A1- 0 654 402
- US-A1- 2005 029 394

## Description

La présente invention concerne une surface aérodynamique et un aéronef muni d'une telle surface aérodynamique.

Plus particulièrement, l'invention vise un saumon d'une dérive sensiblement verticale d'un aéronef.

Certains aéronefs et notamment des giravions munis d'un fenestron® comportent des dérives d'un volume important, la dérive étant généralement munie d'une extrémité libre dénommée parfois « saumon ».

Des équipements optionnels sont de plus agencés sur cette extrémité libre, tels qu'un feu anticollision, un feu de position ou des antennes par exemple.

L'extrémité libre de la dérive est usuellement une pièce moulée dans laquelle les équipements requis sont noyés. L'extrémité libre est donc réalisée en fonction des besoins exprimés par un acquéreur donné. Dès lors, on comprend qu'une extrémité libre de dérive moulée pour un acquéreur initial ne peut souvent pas être réaffectée à un autre acquéreur en cas de désistement de l'acquéreur initial.

L'extrémité libre étant ainsi personnalisée, en cas de réaffectations, il est courant de récupérer les équipements réutilisables et de jeter l'intégralité des pièces moulées. On comprend en effet qu'il est difficile et onéreux de conserver des extrémités libres équipées compte tenu de leur encombrement notamment, d'autant plus qu'il est relativement rare d'utiliser une extrémité libre de dérive pour un aéronef construit pour un acquéreur distinct d'un acquéreur initial.

La présente invention a alors pour objet de proposer une surface aérodynamique de type extrémité libre de dérive, minimisant les pièces devant être mises au rebut suite au désistement d'un acquéreur.

On note que l'arrière plan technologique inclut notamment les documents EP 1 431 125, WO 2007/003403, US 2010/018301, EP 0 900 726, FR 2 933 378.

Par exemple, le document EP 1 431 125 décrit un système de support agencé entre des sièges arrières.

Le document WO 2007/003403 a pour objet un dispositif de fixation de panneaux dans un aéronef.

Le document US 2010/018301 concerne une méthode de tests en vol.

Le document EP 0 900 726 a pour objet un procédé de fabrication d'un avion à l'aide d'une gamme de modules structurels.

Le document FR 2 933 378 présente un procédé de montage d'une antenne à une peau d'un aéronef.

Le document EP 0 654 402 présente un mât de drainage comportant un carénage s'étendant d'une section de solidarisation vers une section libre. Ce mât inclut une plaque présente dans la section de solidarisation portant un thermocontacteur.

On connaît aussi le document US 2005/029394.

Selon l'invention, une surface aérodynamique polyvalente d'un aéronef est munie d'une structure moulée creuse et allongée s'étendant d'une section de solidarisation pour fixer la structure à un corps d'aéronef vers une section libre.

De plus, cette surface aérodynamique est notamment remarquable en ce qu'elle comporte un moyen de support ajouré, agencé dans une section d'accueil distincte de la section de solidarisation, ainsi qu'une plaque de fixation interchangeable fixée réversiblement au moyen de support, cette plaque de fixation comportant au moins un équipement de positionnement d'un aéronef, par exemple visible de l'extérieur de la surface aérodynamique et à choisir dans une liste définie par le constructeur.

Dès lors, l'invention vise une surface aérodynamique, et plus particulièrement une surface aérodynamique de type extrémité libre d'une dérive dénommée parfois « saumon ».

Selon cette invention, on ne fixe pas de manière irréversible des équipements dans une telle surface aérodynamique, mais on fixe ces équipements sur une plaque de fixation amovible. Si un acquéreur souhaite modifier les équipements de la surface aérodynamique, il suffit de désolidariser la plaque de fixation du moyen de support et de la remplacer par une plaque de fixation comprenant les nouveaux équipements requis. La plaque de fixation initiale est éventuellement mise au rebut, les anciens équipements pouvant être stockés.

Une plaque de fixation équipée de premiers équipements est donc interchangeable dans la mesure où elle peut être remplacée par une plaque de fixation de dimensions identiques équipées avec des deuxièmes équipements.

L'invention permet d'éviter la mise au rebut de l'intégralité de la structure moulée, la plaque de fixation représentant le seul organe à mettre au rebut.

Au moins un équipement voire tous les équipements figurent parmi les éléments suivants : un feu anticollision, un feu de position, une antenne d'un système de radionavigation, une antenne d'un système de radiocommunication, une antenne GPS, une antenne satellite. Le moyen de support étant ajouré, des câblages peuvent traverser la structure moulée et le moyen de support pour atteindre de tels équipements agencés sur une plaque de fixation.

De plus, la plaque de fixation peut comprendre un moyen de métallisation la reliant à un circuit de métallisation de la structure moulée, tel qu'une tresse de métallisation ou un moyen de fixation électriquement conducteur par exemple.

La liste des équipements peut comprendre des indications précisant les associations possibles en fonction de l'encombrement disponible sur chaque plaque de fixation.

Selon un autre aspect, la structure est réalisée en matériaux composites.

Toutefois, il est possible d'utiliser un matériau métallique, des matériaux plastiques, voire des matériaux thermoplastiques et/ou thermodurcissables.

Par ailleurs, selon une première réalisation, le moyen de support est agencé dans une section intermédiaire de la structure moulée comprise entre la section de solidarisation et la section libre.

Selon une deuxième réalisation, le moyen de support est agencé dans la section libre, une portion visible de l'équipement saillant de la structure moulée.

Selon la réalisation, la section d'accueil dans laquelle se trouve le moyen de support est soit une section intermédiaire soit la section supérieure.

Outre une surface aérodynamique, l'invention vise aussi un aéronef muni d'une telle surface aérodynamique.

Dès lors, selon l'invention, un aéronef peut comporter une dérive, cette dérive étant munie d'une surface aérodynamique du type décrit précédemment.

L'invention et ses avantages apparaîtront avec plus de détails dans le cadre de la description qui suit avec des exemples de réalisations donnés à titre illustratif en référence aux figures annexées qui représentent :
- la figure 1, un schéma d'un aéronef selon l'invention,
- la figure 2, une vue de dessus partielle d'une surface aérodynamique selon un premier mode de réalisation, et
- la figure 3, une vue isométrique d'une surface aérodynamique selon un deuxième mode de réalisation.

Les éléments présents dans plusieurs figures distinctes sont affectés d'une seule et même référence.

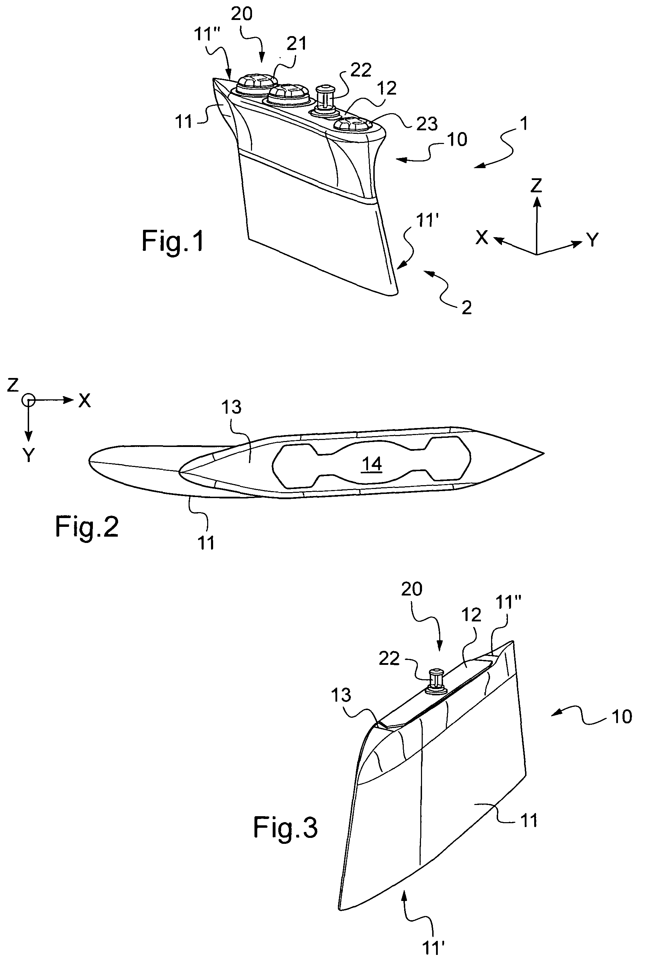

On note que trois directions X, Y et Z orthogonales les unes par rapport aux autres sont représentées sur les figures 1 à 3.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

La figure 1 présente un aéronef 1 comportant une dérive 2, l'aéronef 1 s'étendant le long d'un plan antéropostérieur de symétrie selon la direction longitudinale X. La figure 1 présente uniquement la dérive 2 pour ne pas alourdir inutilement cette figure 1.

L'extrémité libre de la dérive 2 est pourvue d'une surface aérodynamique 10 dénommée parfois « saumon de dérive » ou plus simplement « saumon ».

Dès lors, cette surface aérodynamique 10 inclut une structure moulée 11 creuse et allongée, réalisée en matériaux composites par exemple. Cette structure moulée 11 s'étend en élévation d'une section de solidarisation 11' pour fixer la structure à un corps de l'aéronef vers une section libre 11".

La surface aérodynamique est donc fixée au reste de l'aéronef par sa section de solidarisation.

De plus, la surface aérodynamique 10 comprend une plaque de fixation 12 interchangeable, cette plaque pouvant porter au moins un équipement 20 de positionnement de l'aéronef.

Cet équipement inclut au moins un des éléments suivants : un feu anticollision, un feu de position, une antenne d'un système de radionavigation, une antenne d'un système de radiocommunication, une antenne GPS, une antenne satellite.

Par exemple, en référence à la figure 1, la plaque de fixation peut porter une antenne GPS double 21, un feu anticollision 22 et une antenne VHF/FM de radiocommunication 23.

La plaque de fixation 12 est alors fixée de manière réversible à la structure moulée 11.

Dès lors, cette structure moulée 11 comporte un moyen de support dans une section d'accueil non visible sur la figure 1, la plaque de fixation étant attachée à ce moyen de support par des moyens réversibles usuels de type moyen de vissage par exemple.

Le moyen de support est avantageusement ajouré afin de permettre le passage de câblages à relier aux équipements 20, voire le passage d'une tresse de métallisation à relier à la plaque de fixation 12.

En référence à la figure 2, le moyen de support 13 peut inclure une plaque support comprenant au moins une lumière 14. Cette plaque support peut être un organe moulé constitutif de la structure moulée 11, ou encore un organe fixé de manière réversible ou irréversible à cette structure moulée 11.

De plus, conformément à la première réalisation préférée des figures 1 et 2, le moyen de support est agencé dans une section intermédiaire de la structure moulée disposée entre la section de solidarisation 11' et la section libre 11".

Dès lors, conformément à la figure 1, la plaque de fixation 12 peut être disposée dans la section libre 11", les équipements 20 saillant au moins partiellement vers l'extérieur de la structure moulée 11.

En référence à la figure 3, selon une deuxième réalisation, le moyen de support 13 peut être agencé dans la section libre 11", une portion visible de l'équipement ainsi que la plaque de fixation 12 saillant de ladite structure moulée 11.

Par suite, si un acquéreur requérant initialement la présence de premiers équipements avant de se rétracter pour requérir la présence de deuxièmes équipements, tels que les premiers équipements et le deuxième équipement représentés respectivement sur les figures 1 et 3, alors un opérateur remplace la première plaque de fixation équipée desdits premiers équipements par une deuxième plaque de fixation équipée desdits deuxièmes équipements. Il n'est alors plus nécessaire de changer l'intégralité de la surface aérodynamique 10.

## Revendications

1. Surface aérodynamique (10) polyvalente d'un aéronef (1) munie d'une structure moulée (11) creuse et allongée s'étendant d'une section de solidarisation (11') pour fixer la structure à un corps d'aéronef vers une section libre (11"),
**caractérisée en ce qu'**elle comporte un moyen de support (13) ajouré agencé dans une section d'accueil distincte de la section de solidarisation ainsi qu'une plaque de fixation (12) interchangeable fixée réversiblement audit moyen de support (13), ladite plaque de fixation (12) comportant au moins un équipement (20) de positionnement d'un aéronef, ledit au moins un équipement figurant parmi les éléments suivants : un feu anticollision (22), un feu de position, une antenne d'un système de radionavigation, une antenne d'un système de radiocommunication, une antenne GPS (21), une antenne satellite.

2. Surface aérodynamique selon la revendication 1, **caractérisée en ce que** ladite structure (11) est réalisée en matériaux composites.

3. Surface aérodynamique selon l'une quelconque des revendications 1 à 2,
**caractérisée en ce que** ledit moyen de support (13) est agencé dans une section intermédiaire de ladite structure (11) moulée comprise entre la section de solidarisation (11') et la section libre (11").

4. Surface aérodynamique selon l'une quelconque des revendications 1 à 3,
**caractérisée en ce que** ledit moyen de support (13) est agencé dans la section libre (11"), une portion visible de l'équipement saillant de ladite structure (11) moulée.

5. Aéronef (1),
**caractérisé en ce qu'**il comporte une dérive (2), ladite dérive (2) étant munie d'une surface aérodynamique (10) selon l'une quelconque des revendications 1 à 4.

## Patentansprüche

1. Aerodynamische Mehrzweckfläche (10) eines Luftfahrzeugs (1) mit einem hohlen, länglichen Formkörper (11), der sich von einem Befestigungsabschni.tt (11') zur Befestigung des Körpers an einem Rumpf eines Luftfahrzeugs bis zu einem freien Ende (11") erstreckt, **dadurch gekennzeichnet, dass** sie ein durchbrochenes Trägermittel (13) aufweist, das in einem Aufnahmeabschnitt angeordnet ist, der von dem Befestigungsabschnitt verschieden ist, sowie eine austauschbare Befestigungsplatte (12), die lösbar an dem Trägermittel (13) befestigt ist, wobei die Befestigungsplatte (12) mindestens eine Ausrüstung (20) zur Positionierung eines Luftfahrzeugs aufweist, wobei die mindestens eine Ausrüstung unter folgenden Elementen figurieren kann: einem Antikollisionslicht (22), einem Positionslicht, einer Antenne eines Funknavigationssystems, einer Antenne eines Funkkommunikationssystems, einer GPS-Antenne (21) und einer Satellitenantenne.

2. Aerodynamische Fläche nach Anspruch 1,
**dadurch gekennzeichnet, dass** der Körper (11) aus einem Verbundmaterial hergestellt ist.

3. Aerodynamische Fläche nach einem der Ansprüche 1 bis 2,
**dadurch gekennzeichnet, dass** das Trägermittel (13) in einem Zwischenabschnitt des Formkörpers (11) zwischen dem Befestigungsabschnitt (11') und dem freien Abschnitt (11") angeordnet ist.

4. Aerodynamische Fläche nach einem der Ansprüche 1 bis 3,
**dadurch gekennzeichnet, dass** das Trägermittel (13) in dem freien Abschnitt (11") angeordnet ist, wobei ein sichtbarer Bereich der Ausrüstung über den Formkörper (11) vorsteht.

5. Luftfahrzeug (1),
**dadurch gekennzeichnet, dass** es ein Leitwerk (2) aufweist, wobei das Leitwerk (2) eine aerodynamische Fläche (10) nach einem der Ansprüche 1 bis 4 aufweist.

## Claims

1. Multipurpose aerodynamic surface (10) of an aircraft (1) provided with a hollow and elongated moulded structure (11) extending from a securing section (11') for fixing the structure to an aircraft body towards a free section (11"), **characterised in that** it comprises a perforated support means (13) arranged in a receiving section distinct from the securing section and an interchangeable fixing plate (12) fixed reversibly to said support means (13), said fixing plate (12) comprising at least one piece of aircraft positioning equipment (20), said at least one piece of equipment (20) being from among the following elements: an anti-collision light (22), a position light, an antenna of a radionavigation system, an antenna of a radiocommunication system, a GPS antenna (21), a satellite antenna.

2. Aerodynamic surface according to claim 1,
**characterised in that** said structure (11) is made of composite materials.

3. Aerodynamic surface according to any one of claims 1 to 2, **characterised in that** said support means (13) is arranged in an intermediate section of said moulded structure (11) included between the securing section (11') and the free section (11").

4. Aerodynamic surface according to any one of claims 1 to 3, **characterised in that** said support means (13) is arranged in the free section (11"), a visible portion of the equipment projecting from said moulded structure (11).

5. Aircraft (1),
**characterised in that** it comprises a fin (2), said fin (2) being provided with an aerodynamic surface (10) according to any one of claims 1 to 4.
